# EUROPÄISCHE PATENTANMELDUNG

(11) **EP 4 183 750 A1**
(43) Veröffentlichungstag der Anmeldung: **24.05.2023**
(21) Anmeldenummer: 21209012.0
(22) Anmeldetag: 18.11.2021
(51) Int. Cl.: C02F 1/46, C02F 1/467, E21B 37/06, E21B 37/08, E21B 43/34, C02F 1/78, C02F 1/72, C02F 101/20, C02F 103/06, C02F 1/52

(54) **VORRICHTUNG UND VERFAHREN ZUR WASSERAUFBEREITUNG**

(71) Anmelder: ecotron GmbH, 29227 Celle (DE)
(72) Erfinder: Dörfer, Hans-Jürgen, 29227 Celle (DE); Ritter, René N., 29227 Celle (DE)
(74) Vertreter: Taruttis, Stefan Georg

(57) **Zusammenfassung**

Die Erfindung betrifft ein Verfahren und eine zur Verwendung in dem Verfahren geeignete Vorrichtung, wobei das Verfahren die Schritte
- Ionisieren eines sauerstoffhaltigen Gases durch dielektrische Barriereentladung zur Erzeugung von Gas mit reaktiven Sauerstoffspezies,
- Einmischen des Gases mit reaktiven Sauerstoffspezies in Rohwasser, um behandeltes Rohwasser zu erzeugen,
- optional gezieltes Ausfällen von Eisen- und Manganoxid, und weiter optional Abtrennen ausgefällten Eisen- und Manganoxids aus dem behandelten Rohwasser, um aufbereitetes Wasser herzustellen,
aufweist oder daraus besteht.

## Beschreibung

Die vorliegende Erfindung betrifft ein Verfahren zur Behandlung von Rohwasser, wobei in dem Rohwasser enthaltene Eisen- und Manganbestandteile in Lösung gehalten bzw. in Lösung gebracht werden, und eine zur Durchführung des Verfahrens geeignete Vorrichtung. Vorrichtung und Verfahren zeichnen sich dadurch aus, dass sie für eine kontinuierliche Behandlung des Rohwassers geeignet sind.

Rohwasser ist insbesondere aus Brunnen stammendes und/oder in Rohwasserleitungen enthaltenes Wasser, das üblicherweise vor seiner Verwendung z.B. als Trinkwasser aufbereitet werden muss, wobei anorganische und/oder organische Verunreinigungen aus dem Rohwasser abgetrennt werden. Überdies kann Rohwasser aufzubereitendes Prozesswasser aus industriellen Prozessen sein.

Das Verfahren und die Vorrichtung sind bevorzugt eingerichtet, in Lösung gehaltenes oder in Lösung gebrachte Eisen- und Manganionen gezielt auszufällen, z.B. durch Oxidation behandelten Rohwassers mittels Kontakt mit Luft oder Ozon und Abscheiden in einem offenen Becken oder Rohwasserfilter, der z.B. ein Kies- oder Sandfilter sein kann.

### Stand der Technik

Wohlers, Dissertation 2001"Chemisch-oxidative Wasseraufbereitung mittels ionisiertem Sauerstoff", ISBN 3-89820-274-7, beschreibt zur Wasseraufbereitung die oxidative Wirkung von Wasser, in das durch Plasmaentladung ionisierte Luft eingebracht wurde. Die oxidative Wirkung wird insbesondere am Abbau von synthetischen organischen Pflanzenschutzmitteln beschrieben.

Es ist bekannt, dass sich in Brunnen, die zur Wassergewinnung dienen, aus Eisenoxid und Manganoxid feste Ablagerungen bilden, die auch als Verockerung bezeichnet werden.

Zur Aufbereitung wird Rohwasser aus Brunnen durch Rohwasserleitungen und über Rohwasserfilter, z.B. mit einem Filtermaterial aus Sand, Glaskugeln, festem Manganoxid und/oder Kies, geführt, wobei sich Verockerungen am Filtermaterial ablagern. Bei Zusetzen des Rohwasserfilters kann dieser rückgespült werden, um Ablagerungen mechanisch zu lösen und auszutragen.

### Aufgabe der Erfindung

Die Aufgabe der Erfindung liegt darin, ein Verfahren und eine zur Durchführung des Verfahrens geeignete Vorrichtung anzugeben, um Ablagerungen aus Eisenoxid und Manganoxid in Brunnen und Rohwasserleitungen zu verhindern und/oder abzulösen. Eine bevorzugte Aufgabe liegt darin, ein Verfahren und eine zur Durchführung des Verfahrens geeignete Vorrichtung anzugeben, um Ablagerungen von Eisen- und Manganoxid aus Rohwasser in Brunnen und/oder in Rohwasserleitungen zu verhindern und gezielt Eisen- und Manganoxid aus Rohwasser zu verringern bzw. zu entfernen, wobei bevorzugt nach der Durchführung des Verfahrens keine mit dem Verfahren eingebrachten Chemikalien in dem behandelten Rohwasser verbleiben.

### Beschreibung der Erfindung

Die Erfindung löst die Aufgabe mit den Merkmalen der Ansprüche und insbesondere mittels eines Verfahrens und einer zur Verwendung in dem Verfahren geeigneten Vorrichtung, wobei das Verfahren die Schritte
- Ionisieren eines sauerstoffhaltigen Gases, insbesondere Luft, mit Sauerstoff angereicherte Luft oder 100% Sauerstoff, durch dielektrische Barriereentladung zur Erzeugung von Gas mit reaktiven Sauerstoffspezies,
- Einmischen des Gases mit reaktiven Sauerstoffspezies in Rohwasser, um behandeltes Rohwasser zu erzeugen,
- optional gezieltes Ausfällen von Eisen- und Manganoxid, und weiter optional Abtrennen ausgefällten Eisen- und Manganoxids aus dem behandelten Rohwasser, um aufbereitetes Wasser herzustellen,
aufweist oder daraus besteht.

Das Ionisieren des sauerstoffhaltigen Gases erzeugt ionisierten Sauerstoff, z.B. O₂⁻ und O₂⁺ und unter anderem Ozon, die insgesamt als reaktive Sauerstoffspezies zusammengefasst werden. Erfindungsgemäß bevorzugt erfolgt das Ionisieren mittels dielektrischer Barriereentladung bei elektrischen Feldern, die zur Erzeugung von Ozon geeignet sind und/oder die beim unmittelbar anschließenden Einleiten des Gases mit reaktiven Sauerstoffspezies in Wasser zur Erzeugung von Wasserstoffperoxid geeignet sind.

Überraschender Weise hat sich gezeigt, dass die durch dielektrische Barriereentladung in sauerstoffhaltigem Gas erzeugten reaktiven Sauerstoffspezies nach Einmischen in Wasser geeignet sind, Eisen- und Manganionen in Rohwasser gelöst zu halten bzw. deren Ausfällung zu verhindern und überdies bereits in Form von Verockerungen ausgefallene Eisen- und Manganionen in Lösung zu bringen und/oder von einer Unterlage abzulösen. Die Wirkung dieser unmittelbar nach ihrer Erzeugung in Wasser eingemischten reaktiven Sauerstoffspezies, Eisen- und Manganionen in Lösung zu halten bzw. als Verockerung ausgefallenes Eisen und Mangan in Lösung zu bringen oder von einer Unterlage abzulösen war deshalb unerwartet, weil bekannt ist, dass gelöste Eisen- und Manganionen aus Wasser ausfallen, wenn das Wasser mit Luft oder Ozon als Oxidationsmittel in Kontakt gebracht wird.

Aus dem mit dem in Wasser eingemischten reaktiven Sauerstoffspezies behandelten Rohwasser, das Eisen- und Mangan in gelöster Form enthält, kann Eisen und bevorzugt Mangan ausgefällt werden, insbesondere durch in Kontakt bringen mit einem Oxidationsmittel, das bevorzugt gasförmig ist, z.B. Luft, mit Sauerstoff angereichte Luft, Sauerstoff und/oder Ozon ist. Daher umfasst diese Ausführungsform des Verfahrens das gezielte Ausfällen von Eisen und bevorzugt Mangan aus dem behandelten Rohwasser durch in Kontakt bringen mit einem Oxidationsmittel in einer dazu eingerichteten Einrichtung, z.B. einem offenen oder mit gasförmigem Oxidationsmittel belüfteten Becken oder Rohwasserfilter, der z.B. ein Sand- oder Kiesfilter ist. Eine solche Einrichtung kann ein mit Partikeln, z.B. Glaskugeln, Sand und/oder Kies gefüllter Rohwasserfilter und/oder ein offenes Becken sein. Generell ist bevorzugt, dass das mit eingemischten reaktiven Sauerstoffspezies behandelte Rohwasser vor und/oder während der Durchströmung des Rohwasserfilters mit gasförmigem Oxidationsmittel, insbesondere mit Luft, in Kontakt gebracht wird, z.B. durch Verrieseln dieses Rohwassers über einen Rohwasserfilter, durch Einbringen von Luft in die Rohwasserleitung, die in den Rohwasserfilter mündet, und/oder durch Einbringen von Luft in den Rohwasserfilter, z.B. in dessen unteres Ende.

In weiterer Ausführungsform kann eine Einrichtung zum gezielten Ausfällen von Eisen und bevorzugt Mangan eine Einrichtung zur dielektrischen Barriereentladung zur Erzeugung von Gas mit ionisiertem Sauerstoff, insbesondere reaktiven Sauerstoffspezies aufweisen, die zum unmittelbar anschließenden Einmischen dieses Gases in Wasser eingerichtet ist, sowie zum anschließenden Einbringen dieses Wassers in die Einrichtung zum gezielten Ausfällen. Das Einbringen von Wasser, in das mittels dielektrischer Barriereentladung erzeugte reaktive Sauerstoffspezies eingemischt sind, löst in der Einrichtung zum gezielten Ausfällen ausgefällte Verockerungen, so dass diese Einrichtung regeneriert wird und gelöste Verockerungen ausgetragen werden und entsorgt werden können.

Das aufbereitete Wasser hat nach Ausfällen von Eisen- und Manganoxid einen gegenüber dem Rohwasser geringeren Gehalt an Eisen- und Manganoxid, z.B. einen maximalen Gehalt an Fe von 0,2 mg/mL, insbesondere geringere Gehalte als sie durch die Trinkwasserverordnung vorgegeben sind.

Generell ist Rohwasser Grund- und Brunnenwasser, optional Prozesswasser aus der Industrie vor seiner Aufbereitung, insbesondere Wasser, aus dem gelöste Eisen- und Manganverbindungen bzw. Verockerungen noch nicht abgetrennt wurden. Zur Durchführung des Verfahrens, insbesondere mit der erfindungsgemäßen Vorrichtung, kann das Rohwasser z.B. in einem Brunnen und/oder einer Rohwasserleitung und/oder einem Rohwasserfilter sein.

Generell weist ein Rohwasserfilter ein Filterbett mit oder aus Partikeln auf, das Sand und/oder Kies, insbesondere Quarzsand und/oder Quarzkiesaufweist oder daraus besteht. Volumen und Höhe des Filterbetts können entsprechend eines Rohwasserfilters auf den geforderten Wasserdurchsatz ausgelegt sein.

Zum Ionisieren des sauerstoffhaltigen Gases werden generell Elektroden, von denen zumindest die Elektrode einer Polarität eine, bevorzugt die Elektroden beider Polaritäten, von vorbeiströmendem sauerstoffhaltigem Gas mittels eines Dielektrikums abgeschirmt sind, mit einer Spannung beaufschlagt, die eingerichtet ist, ein elektrisches Feld zu erzeugen, das insbesondere ausreicht, Ozon zu erzeugen. Dieser Vorgang wird als dielektrische Barriereentladung oder auch als Erzeugung kalten Plasmas bezeichnet. Die Spannung ist bevorzugt gepulste elektrische Wechselspannung. Die Wechselspannung kann z.B. eine Frequenz von 10 bis 50 kHz, insbesondere 15 bis 30 kHz aufweisen, insbesondere jeweils bei 1 bis 10 kV/cm.

Die elektrische Spannung erzeugt z.B. eine elektrische Impulsenergie im Bereich von 1 bis 20 kV, z.B. von 10 bis 20 kV, bevorzugt 15 kV, mit einer Pulsbreite von 10 ns bis 10 µs, insbesondere mit einem Impulsabstand von 0,02 bis 2 ms, bevorzugt 0,5 bis 1 ms.

Generell kann die Einrichtung zur dielektrischen Barriereentladung vom Signal eines Sensors gesteuert sein, das ein Maß für die Konzentration in Rohwasser eingemischter reaktiver Sauerstoffspezies ist. Der Sensor kann in einer Rohwasserleitung angeordnet sein, bevorzugt stromabwärts der Stelle, an der reaktive Sauerstoffspezies direkt oder indirekt eingemischt werden. Ein solcher Sensor kann z.B. ein Redoxsensor sein.

Durch das Einmischen des Gases mit ionisiertem Sauerstoff bzw. reaktiven Sauerstoffspezies in Rohwasser gehen die reaktiven Sauerstoffspezies zumindest teilweise in Lösung. Gegenwärtig wird angenommen, dass Reaktionsprodukte des ionisierten Sauerstoffs und/oder von Ozon mit Wasser mit in dem Rohwasser enthaltenen Verunreinigungen, insbesondere mit Eisen- und Manganbestandteilen reagiert, sodass lösliche Eisen- und Manganverbindungen, z.B. lösliche Eisen(II)-Ionen und lösliche Mangan-Ionen erhalten werden, und/oder lösliche Eisen- und Manganverbindungen gebildet werden, z.B. Eisen(III)-oxidhydrat oder Mangan (VII)-oxid. Generell kann die Konzentration des ionisierten Sauerstoffs durch Einstellen des Luftdurchsatzes durch den Reaktor zu dielektrischen Barriereentladung und/oder durch Einstellen der Druckverhältnisse in der Vorrichtung zum Einmischen des Gases mit reaktiven Sauerstoffspezies gesteuert oder geregelt werden.

Durch das Verfahren werden Eisen- und Manganverbindungen generell nur vorübergehend in Lösung gebracht und in Lösung gehalten, sodass die gelösten Eisen- und Manganverbindungen nach einer Haltezeit, insbesondere nach Kontaktieren mit einem gasförmigen Oxidationsmittel, z.B. Luft, als unlösliche Eisen- bzw. Manganoxide optional aus dem behandelten Rohwasser gezielt ausgefällt werden können. Das Ausfällen erfolgt bevorzugt mit Durchströmen eines Rohwasserfilters mit dem behandelten Rohwasser, oder durch Lagern, z.B. in einem Becken . Dabei kann sich ausfallendes Eisen- oder Manganoxid z.B. an Filterkies oder an Oberflächen von Becken oder Leitungen anlagern oder darin sedimentieren. Ausgefälltes Eisen- bzw. Manganoxid kann anschließend mittels ionisiertem Gas bzw. vorbehandeltem Wasser wieder in Lösung gebracht, optional aufgefangen werden.

Optional kann ungelöstes Gas, z.B. Luftstickstoff, nach dem Einmischen des Gases, das reaktive Sauerstoffspezies enthält, in Wasser abgeschieden werden, z.B. an einem Gasabscheider oder Entlüftungsventil. Dadurch kann mit dem Verfahren in einem geschlossenen Brunnenschacht oder in einer geschlossenen Rohwasserleitung befindliches Rohwasser mit ionisiertem Sauerstoff, das in Wasser eingemischt wurde, behandelt werden kann, ohne dass ungelöstes Gas aufsteigt, sodass insbesondere in den Brunnen und/oder in die Rohwasserleitung keine Gasblasen eingetragen werden .

Generell hat das Verfahren den Vorteil, dass die in Wasser eingemischten reaktiven Sauerstoffspezies, die durch die dielektrische Barriereentladung in sauerstoffhaltigem Gas erzeugt wurden, auch bei niedrigen Strömungsgeschwindigkeiten von Wasser eisen- und manganhaltige Ablagerungen, insbesondere Verockerungen, verhindern und ablösen und/oder auflösen. Niedrige Strömungsgeschwindigkeiten sind insbesondere solche, die eine laminare Strömung ausbilden, z.B. über den Strömungsquerschnitt gemittelte Strömungsgeschwindigkeiten von 0,02 bis 0,05 m/s, z.B. maximal 0,03 m/s. Damit hat das Verfahren zur Regeneration von Brunnen, Filtern und/oder Rohwasserleitungen den Vorteil, dass keine turbulente Strömung erzeugt werden muss, um Ablagerungen zu verhindern und insbesondere Verockerungen abzulösen, so dass z.B. bei der Regeneration von Brunnen, den Brunnen umgebenden Filterkies, sowie von Rohwasserfiltern niedrige Strömungsgeschwindigkeiten eingestellt werden können.

In einer Ausführungsform erfolgt das Einmischen des Gases mit reaktiven Sauerstoffspezies direkt in das Rohwasser, insbesondere direkt innerhalb eines Brunnens und/oder innerhalb eines Rohwasserfilters und/oder innerhalb einer Rohwasserleitung, die z.B. von einem Brunnen gespeist sein kann. Dazu kann als Vorrichtung zum Einmischen des Gases mit reaktiven Sauerstoffspezies z.B. ein Injektor, insbesondere in Form eines Gasinjektors, einer Gasdüse, eines Düsenrings, einer Venturidüse, einer Wasserstrahlpumpe, in den Brunnenschacht, den Rohwasserfilter oder die Rohwasserleitung angeordnet werden und mit dem Gas mit reaktiven Sauerstoffspezies beaufschlagt werden.

In einer zweiten Ausführungsform erfolgt das Einmischen des Gases mit reaktiven Sauerstoffspezies in Rohwasser als indirektes Einmischen, wobei das Gas mit reaktiven Sauerstoffspezies in Wasser, das z.B. Rohwasser sein kann, eingemischt wird, um vorbehandeltes Wasser zu erzeugen, und anschließend das vorbehandelte Wasser in das Rohwasser, z.B. in den Schacht eines Brunnens und/oder in eine einen Brunnenschacht umgebende Filterschicht eines Brunnens und/oder in einen Aquifer, insbesondere in den den Brunnenschacht umgebenden Filterkies, und/oder in eine Rohwasserleitung und/oder in einen Rohwasserfilter, eingeleitet wird. Dabei wird bevorzugt das vorbehandelte Wasser unmittelbar anschließend, insbesondere innerhalb von maximal 5 min oder maximal 2 min oder maximal 1 min an das Einmischen des Gases mit reaktiven Sauerstoffspezies in Wasser, in das Rohwasser eingeleitet. Dabei kann im vorbehandelten Wassere ungelöstes Gas, z.B. Luftstickstoff oder nicht ionisierter Luftsauerstoff, nach dem Einmischen abgeleitet werden, z.B. mittels eines Entlüftungsventils oder Gasabscheiders

Generell bevorzugt wird Gas mit reaktiven Sauerstoffspezies bzw. das damit vorbehandelte Wasser sowohl in einen Brunnenschacht eingebracht als auch in die an den Brunnenschacht angeschlossene Rohwasserleitung.

In einer Variante, in der das Verfahren insbesondere zur Verminderung oder zum Ablösen von bereits entstandenen Ablagerungen von Eisen- und Manganoxid bzw. Verockerungen geeignet ist, wird das Gas mit reaktiven Sauerstoffspezies in Rohwasser eingemischt, das innerhalb eines Brunnenschachts und/oder einer Rohwasserleitung und/oder eines Rohwasserfilters sein kann. Es hat sich gezeigt, dass das Einbringen von Gas mit reaktiven Sauerstoffspezies in Rohwasser in einem Brunnen bereits entstandene Ablagerungen mit Eisen- und Manganoxid ablöst und abgelöste Ablagerungen mit Rohwasser, das aus dem Brunnen strömt, ausgeschwemmt werden.

In einer Ausführungsform des Verfahrens, in der das Rohwasser innerhalb eines Brunnenschachts mit daran anhaftenden Verockerungen ist, auch als Brunnenregeneration bezeichnet, ist bevorzugt, dass nur während einer Phase, in der ein Brunnen nicht zur Entnahme von Rohwasser genutzt wird, das Gas mit ionisiertem Sauerstoff in das Rohwasser eingemischt wird, das innerhalb des Brunnenschachts ist. Dazu kann das Einmischen des Gases mit ionisiertem Sauerstoff in einer Tiefe des Brunnenschachts von z.B. 90 % bis 10 % der Schachthöhe erfolgen, bevorzugt in einen Bereich unterhalb der Entnahmestelle im Brunnenschacht, z.B. in der unteren Hälfte der Filterstrecke oder an zumindest zwei über die Höhe der Filterstrecke verteilten Stellen unterhalb der Entnahmestelle. Weiter bevorzugt wird während des Einbringens von Gas mit reaktiven Sauerstoffspezies in den Brunnenschacht oder anschließend daran Wasser aus dem Brunnen entnommen, insbesondere bei niedriger Strömungsgeschwindigkeit, um abgelöste Verockerungen bzw. Eisen- und Manganoxid aus dem Brunnen auszutragen. Die abgelösten Verockerungen bzw. Eisen- und Manganoxid kann z.B. als Feststoff und/oder als Kolloid mit dem Wasser aus dem Brunnen ausgetragen und bevorzugt verworfen werden.

In einer Ausführungsform, in der das Rohwasser innerhalb einer Rohwasserleitung, ist, ist bevorzugt, dass das Einmischen des Gases mit ionisiertem Sauerstoff an einer ersten Stelle und an einer davon beabstandeten zweiten Stelle erfolgt, optional mit Abscheiden ungelösten Gases an zumindest einer weiteren Stelle.

In einer Ausführungsform des Verfahrens, in der das Rohwasser innerhalb eines Rohwasserfilters ist, der bevorzugt Verockerungen aufweist, wird der Rohwasserfilter statisch oder durchströmend mit vorbehandeltem Wasser behandelt, in das Gas mit reaktiven Sauerstoffspezies eingemischt wurde. Alternativ kann gemäß einer Ausführungsform des Einmischens in den Rohwasserfilter das Gas mit reaktiven Sauerstoffspezies eingebracht werden, bevorzugt durch einen Einlass, der unterhalb des Filterbetts angeordnet ist, wobei der Rohwasserfilter gleichzeitig oder anschließend mit Wasser, auch als Waschwasser bezeichnet, durchströmt werden kann, um abgelöste Verockerungen, z.B. Partikel oder Kolloide mit oder aus Eisen- und Manganoxid, aus dem Filter auszuwaschen. Das mit Eisen- und Manganoxid angereicherte Waschwasser kann aufgefangen werden. In dieser Ausführungsform ist bevorzugt, dass der Rohwasserfilter nur in einer Phase, in der er nicht zum Filtrieren von Rohwasser benutzt wird, zur Regeneration bzw. zum Ablösen von Verockerungen, mit dem Verfahren behandelt wird, und in Phasen, in denen er zum Filtrieren von Rohwasser benutzt wird, nicht mit dem Verfahren behandelt wird, sondern von Rohwasser durchströmt wird.

In einer Variante, in der das Verfahren insbesondere zur Verhütung oder Verzögerung der Bildung von Verockerungen bzw. Ablagerungen von Eisen- und Manganoxid in Brunnen und/oder in Rohwasserleitungen und/oder in Rohwasserfiltern oder in einer den Brunnenschacht umgebenden Filterkiesschicht geeignet ist, wird das Gas mit reaktiven Sauerstoffspezies in Rohwasser eingemischt, das innerhalb eines Brunnenschachts ist oder in einen Brunnenschacht eingebracht wird, oder das in einer Rohwasserleitung ist oder in diese eingebracht wird. Das Einmischen von Gas mit reaktiven Sauerstoffspezies in Rohwasser führt dazu, dass darin gelöst enthaltene Eisen- und Manganverbindungen nicht ausfallen, sondern gelöst bleiben und keine Ablagerungen bilden. Insbesondere können mit dem erfindungsgemäßen Verfahren höhere Konzentrationen an Eisen und Mangan in Lösung gehalten werden als mit herkömmlichen Verfahren.

Generell kann Gas mit reaktiven Sauerstoffspezies bzw. dieses enthaltendes vorbehandeltes Wasser satzweise oder kontinuierlich in einen Brunnen und/oder in eine Rohwasserleitung eingemischt werden.

In einer Ausführungsform wird das Gas mit reaktiven Sauerstoffspezies in Rohwasser eingemischt, das innerhalb einer Rohwasserleitung ist, die an einen Brunnenschacht angeschlossen sein kann. Dabei kann das Gas kontinuierlich oder satzweise z.B. an Stellen der Rohwasserleitung eingemischt werden, die bei der über den Querschnitt der Rohwasserleitung gemittelten Strömungsgeschwindigkeit um 1 bis 5 min voneinander entfernt sind.

Die zur Verwendung für das Verfahren geeignete Vorrichtung weist zumindest eine an einem Brunnen und/oder an einer Rohwasserleitung angeschlossene Einrichtung zur dielektrischen Barriereentladung auf, die für die Erzeugung von Gas mit reaktiven Sauerstoffspezies eingerichtet ist. Dabei kann die Einrichtung zur dielektrischen Barriereentladung direkt angeschlossen sein, um das Gas mit ionisiertem Sauerstoff unmittelbar in einen Brunnenschacht und/oder eine Rohwasserleitung und/oder einen Rohwasserfilter einzumischen, z.B. mittels einer Vorrichtung zum Einmischen des Gases mit reaktiven Sauerstoffspezies, z.B. mittels eines Gasinjektors, der durch einströmendes Wasser antreibbar ist, oder zumindest je einer im Brunnenschacht und/oder in der Rohwasserleitung und/oder in dem Rohwasserfilter mündenden Gasdüse. Alternativ kann die Einrichtung zur dielektrischen Barriereentladung indirekt angeschlossen sein, z.B. mittels zumindest einer wasserführenden Leitung, die z.B. Rohwasser führt, in die das Gas mit reaktiven Sauerstoffspezies eingemischt wird, um vorbehandeltes Wasser zu erzeugen, und die wasserführende Leitung in dem Brunnenschacht und/oder in der Rohwasserleitung mündet.

Die wasserführende Leitung kann z.B. Rohwasser aus dem Brunnen oder einer daran angeschlossenen Rohwasserleitung zu einem Mischer führen, an dem die Einrichtung zur dielektrischen Barriereentladung angeschlossen ist. Generell kann ein Mischer zum Einmischen von Gas mit reaktiven Sauerstoffspezies in Wasser ein Gasinjektor oder eine Venturidüse sein, der durch einströmendes Wasser antreibbar ist, eine im Brunnen oder in der Leitung mündende Gasdüse, oder kann ein Wasserbehälter sein, der von dem Gas mit reaktiven Sauerstoffspezies durchströmt wird, insbesondere mit einem Einlass für das Gas in seinem unteren Bereich. Ein solcher Wasserbehälter, auch als Blasensäule zu bezeichnen, weist bevorzugt eine Entlüftungsöffnung auf, z.B. am oberen Ende.

Bevorzugt kann stromabwärts des Brunnens, insbesondere an der daran angeschlossenen Rohwasserleitung, eine Einrichtung zum Ausfällen von Eisen- und Manganoxid angeschlossen sein, die eingerichtet ist, dass sie von behandeltem Rohwasser durchströmt wird, um gelöste Eisen- und Manganoxide daraus auszufällen. Dabei ist die Rohwasserleitung bevorzugt an einen Brunnen angeschlossen, an den eine Einrichtung zur dielektrischen Barriereentladung und zum Einmischen von Gas mit reaktiven Sauerstoffspezies angeschlossen ist. Die Einrichtung zum Ausfällen von Eisen- und Manganoxid kann z.B. ein Behälter zum Lagern des Wassers sein, optional offen, weiter optional gefüllt mit Sand oder Kies, z.B. ein Rohwasserfilter.

Bevorzugt weist die Einrichtung zum Ausfällen von Eisen- und Manganoxid eine angeschlossene Einrichtung zur dielektrischen Barriereentladung und zum Einmischen von Gas mit reaktiven Sauerstoffspezies auf, die bevorzugt eingerichtet ist, in der Einrichtung zum Ausfällen abgelagertes Eisen- und Manganoxid abzulösen und auszutragen. Diese Einrichtung zum Einmischen von Gas mit reaktiven Sauerstoffspezies ist gesteuert, nur im Anschluß an das Durchströmen mit vorbehandeltem und mit Oxidationsmittel versetztem Rohwasser und Ausfällen von Verockerungen daraus, z.B. bei Unterbrechung der Durchströmung mit solchem Rohwasser, reaktive Sauerstoffspezies zu erzeugen und in die Einrichtung zum Ausfällen, die insbesondere ein Rohwasserfilter ist, einzuleiten, um diese Einrichtung zum Ausfällen zu regenerieren. Entsprechend ist die Einrichtung zum Einmischen von Gas mit reaktiven Sauerstoffspezies weiter bevorzugt gesteuert ist, kein Gas mit reaktiven Sauerstoffspezies zu erzeugen. Bevorzugt weist die Einrichtung zum Ausfällen zumindest zwei Behälter auf, die bevorzugt jeweils Rohwasserfilter sind, die alternativ an die Rohwasserleitung anschließbar sind, wobei die Einrichtung zur dielektrischen Barriereentladung und zum Einmischen von Gas mit reaktiven Sauerstoffspezies an dem Behälter angeschlossen ist und betrieben wird, der nicht von behandeltem Rohwasser durchströmt wird bzw. nicht an die Rohwasserleitung angeschlossen ist.

Die Einrichtung zur dielektrischen Barriereentladung weist zumindest zwei Elektroden auf, von denen die Elektroden einer Polarität, bevorzugt die Elektroden beider Polaritäten, durch ein Dielektrikum von vorbeiströmendem sauerstoffhaltigen Gas getrennt sind. Die Elektroden können als parallele Platten oder als Röhren, z.B. konzentrisch angeordnet, ausgebildet sein, optional als Gitter oder als kontinuierliche Elektroden. Generell können die Elektroden einer Polarität von zumindest zwei Teilelektroden gebildet sein.

In einer bevorzugten Ausführungsform umfasst die Vorrichtung zumindest eine Einrichtung zur dielektrischen Barriereentladung, die eingerichtet ist, Gas mit reaktiven Sauerstoffspezies zu erzeugen und in einen Mischer einzubringen, um vorbehandeltes Wasser zu erzeugen. Der zumindest eine Mischer ist über eine erste wasserführende Leitung mit einem Brunnenschacht und/oder einer Rohwasserleitung und/oder einem Rohwasserfilter verbunden. Die erste wasserführende Leitung weist bevorzugt eine Pumpe stromabwärts des Mischers auf, z.B. zwischen dem Mischer und dem Brunnenschacht, zwischen dem Mischer und der Rohwasserleitung, und/oder zwischen dem Mischer und dem Rohwasserfilter, da stromabwärts des Mischers weniger bzw. keine Verockerungen aus Rohwasser ausfallen, die die Pumpe zusetzen könnten. Der Brunnenschacht und/oder die Rohwasserleitung und/oder der Rohwasserfilter ist durch eine zweite wasserführende Leitung mit dem Mischer verbunden, in der optional eine weitere Pumpe angeordnet ist, die eingerichtet ist, Rohwasser in Richtung auf den Mischer zu fördern. Dabei sind der Mischer und die Einrichtung zur dielektrischen Barriereentladung bevorzugt oberhalb des Brunnenschachts angeordnet.

Die erfindungsgemäße Vorrichtung kann durch Anschließen zumindest einer Einrichtung zur dielektrischen Barriereentladung an einen herkömmlichen Brunnen und/oder eine herkömmliche Rohwasserleitung, optional Anschließen an eine Einrichtung zum Ausfällen von Eisen- und Manganoxid, die insbesondere ein Rohwasserfilter ist, für deren Regeneration, hergestellt werden. Dabei kann das Anschließen generell ein direktes Anschließen sein, oder kann ein indirektes Anschließen sein, z.B. mittels einer wasserführenden Leitung, die z.B. Rohwasser führt, an die die Einrichtung zur dielektrischen Barriereentladung angeschlossen wird, um das Gas mit reaktiven Sauerstoffspezies einzumischen, wobei die wasserführende Leitung in den Brunnen und/oder in die Rohwasserleitung und/oder in die Einrichtung zum Ausfällen von Eisen- und Manganoxid mündet.

Es ist generell bevorzugt, dass das Verfahren unter Verwendung der Vorrichtung durchgeführt wird.

Die Erfindung wird nun genauer anhand von Beispielen mit Bezug auf die Figuren beschrieben, in denen
- Fig. 1 schematisch ein Ausführungsform der Erfindung zur Förderung von Reinwasser aus Rohwasser,
- Fig. 2 eine Ausführungsform der Vorrichtung,
- Fig. 3 schematisch den Aufbau einer erfindungsgemäßen Vorrichtung zur Regeneration eines verockerten Rohwasserfilters,
- Fig. 4 einen Graphen für die gemessene Durchsatzleistung zweier Rohwasserfilter,
- Fig. 5 ein Foto der Innenwand eines Brunnenschachts aus Holz, der mit dem erfindungsgemäßen Verfahren regeneriert wurde,
zeigen.

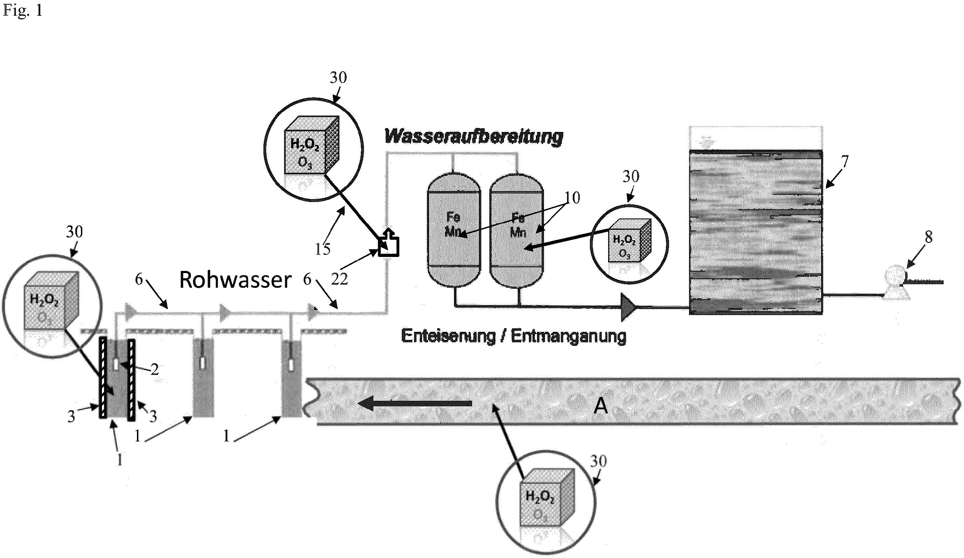

Die Fig. 1 zeigt in der Übersicht über eine Ausführungsform der erfindungsgemäßen Vorrichtung, die zur Verwendung als Wasserwerk bzw. zur Erzeugung von Reinwasser durch Enteisenung und/oder Entmanganung von Rohwasser, das aus Brunnen 1 stammt. Die Brunnen 1 sind in einen Aquifer A eingebracht und entnehmen mittels der Entnahmestelle 2 Rohwasser, das durch die Rohwasserleitung 6 zu einer Einrichtung 10 zum Ausfällen von Eisen- und Manganoxid geleitet wird. Die Einrichtung 10 zum Ausfällen von Eisen- und Manganoxid ist hier durch eine Anordnung von zumindest zwei Kiesfiltern stellvertreten, die bevorzugt von Luft durchströmt sind. Zur Verhinderung des Ausfällens von Verockerungen, insbesondere Eisen- und Manganoxid, in der Rohwasserleitung 6 ist ein Injektor 22 in der Rohwasserleitung angeordnet, der zur Zuführung von Gas, das reaktive Sauerstoffspezies (z.B. H₂O₂ und/oder O₃) enthält, mittels einer Leitung 15 mit dem Reaktor 30 verbunden ist, der zur dielektrischen Barriereentladung eingerichtet ist.

Reaktive Sauerstoffspezies können alternativ, bevorzugt zusätzlich, in die Brunnen 1 und/oder in den Aquifer A, bevorzugt in Filterkies 3 eines Brunnens 1 eingebracht werden. Zum Einbringen reaktiver Sauerstoffspezies kann ein Reaktor 30, der zur dielektrischen Barriereentladung in ein sauerstoffhaltiges Gas, bevorzugt Luft oder reiner Sauerstoff, eingerichtet ist, an Brunnen 1, Aquifer A, Filterkies 3, bevorzugt an die Rohwasserleitung 6 angeschlossen sein.

Es hat sich gezeigt, dass die Verhinderung der Bildung von Verockerungen im Aquifer A, im Brunnen 1 und/oder in der Rohwasserleitung 6 durch Einleiten von reaktiven Sauerstoffspezies, die durch den Reaktor 30 mittels dielektrischer Barriereentladung erzeugt wurden, auch die Ausfällung von Verockerungen, insbesondere von Eisen- und Manganoxid, zur Enteisenung und Entmanganung in der Einrichtung 10 zum Ausfällen durchführen lässt.

Zur Regeneration eines der Kiesfilter der Einrichtung 10 zum Ausfällen ist bevorzugt ein Reaktor 30 daran angeschlossen, um in einem Betriebszustand, in dem kein Eisen- und Manganoxid ausgefällt wird, Wasser mit darin eingebrachten reaktiven Sauerstoffspezies einzuleiten.

Aus der Einrichtung 10 zum Ausfällen wird das nun enteisente und entmangante Wasser als Reinwasser durch eine Reinwasserleitung 9 in einen Reinwasserbehälter 7 geleitet, anschließend mittels einer Reinwasserpumpe 8 gefördert.

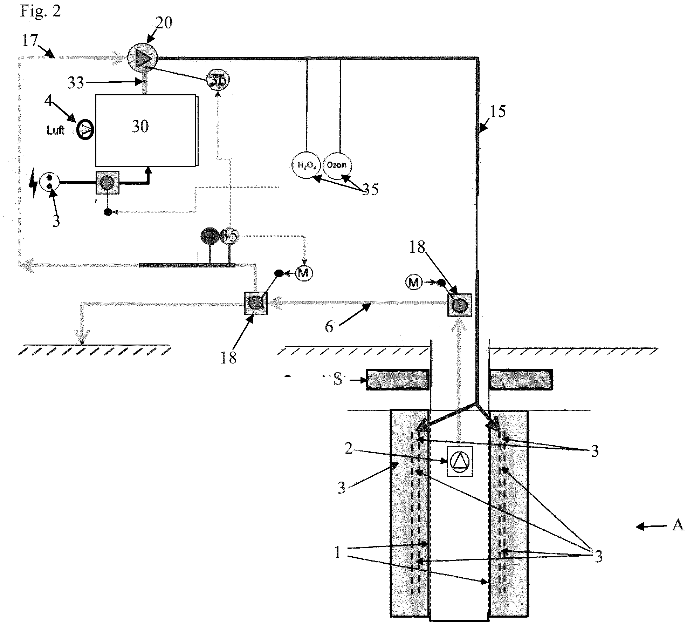

Die Fig. 2 zeigt eine Ausführungsform für einen Brunnen 1, der sich unterhalb einer Sperrschicht S erstreckt, bei der ein Reaktor als Einrichtung zur dielektrischen Barriereentladung 30 zur dielektrischen Barriereentladung auf zugeführte Luft mittels einer Leitung 33 mit einem Injektor 22 zum Einmischen des Gases mit reaktiven Sauerstoffspezies, die durch die dielektrische Barriereentladung aus Luftsauerstoff erzeugt wurden, in Wasser verbunden ist. Das Wasser kann durch eine Rückführleitung 17, die Rohwasser aus dem Brunnen 1 führt, zum Injektor 22 geleitet werden, der eine Vorrichtung 22 zum Einmischen des Gases mit reaktiven Sauerstoffspezies bildet. Die Rückführleitung 17 kann z.B. an der Rohwasserleitung 6 angeschlossen sein. Der Injektor ist mittels einer Leitung 15 mit dem Brunnen 1 verbunden, um Wasser, in das das Gas mit reaktiven Sauerstoffspezies eingemischt wurde, in den Brunnen 1 zu leiten, z.B. in den Filterkies 3, der den Brunnen 1 umgibt. Die Entnahme von Wasser aus dem Brunnen 1 erfolgt durch eine Entnahmestelle 2, die die Rückführleitung 17 speist.

Der Reaktor 30, insbesondere dessen elektrische Spannungsquelle 34, ein Kompressor 4 zur Luftzuführung in den Reaktor 30 und/oder ein Ventil 18 in der Rückführleitung 17, das den Volumenstrom zum Injektor 22 steuert, können abhängig vom Signal eines Sensors 35 gesteuert sein. Ein Sensor 35 kann z.B. in der Leitung 15 angebracht sein und das Redoxpotential, die Konzentration von Wasserstoffperoxid und/oder von Ozon von behandeltem Wasser bestimmen. Alternativ oder zusätzlich kann ein Sensor 35 eingerichtet sein, aus dem Brunnen 1 entnommenes Rohwasser zu messen, z.B. dessen Redoxpotential, die Konzentration von Wasserstoffperoxid und/oder von Ozon. Dazu kann ein Sensor 35 in der Rückführleitung 17 angebracht sein. Weiterhin ist bevorzugt, einen Drucksensor 36 am Injektor 22 anzubringen, um den Unterdruck in dessen Bereich zu bestimmen, in dem Gas eingemischt wird.

### Beispiel 1: Ablösung von Eisenoxid von Filterkies

Als Beispiel für Rohwasser wurde Eisensulfat zu 4 g/L in Trinkwasser gelöst, auf eine Glassäule mit Filterkies (Schütthöhe 10 cm, mittlere Korngröße 2 bis 3,5 mm) gegeben, bis der Filterkies von ca. 3 cm Höhe der Lösung überdeckt war und zunächst ohne Bewegung stehengelassen. Bereits während des Einleitens wurde erkennbar Fe3+ gebildet, das sich auf und in dem Filterkies absetzte.

Zur Auflösung des abgesetzten Fe3+ wurde Wasser unterhalb des Filterkieses eingeleitet, das unmittelbar zuvor kontinuierlich in einer Blasensäule von 4,5 L/min Luft durchströmt wurde, die mittels dielektrischer Barriereentladung (1600 V, 50 Hz, isolierte Gitterelektroden, Abstand ca. 2-5 mm) ionisiert wurde, um reaktive Sauerstoffspezies zu erzeugen. Innerhalb von ca. 2,5 h der kontinuierlichen Einleitung dieses vorbehandelten Wassers klarte das Wasser auf und Eisenionen wurden aus dem Filterkies ausgetragen.

Dieser Versuch zeigt, dass Fe3+ durch die indirekte Einleitung von reaktiven Sauerstoffspezies, die in Wasser eingebracht wurden, gelöst und entfernt werden konnte.

### Beispiel 2: Ablösung von Eisenoxid von Filterkies

Stellvertretend für einen verockerten Rohwasserfilter wurde mechanisch aus einem Rohwasserfilter ausgewaschenes Verockerungsmaterial als eine horizontale Schicht in einer vertikalen Säule zwischen zwei Filterkiesschichten (mittlere Korngröße 2 bis 3,5 mm) angeordnet.

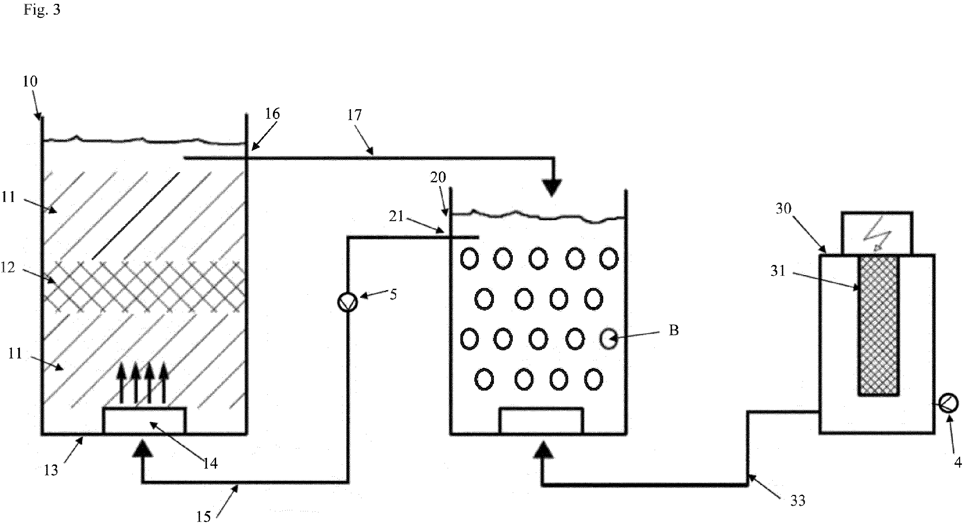

Fig. 3 zeigt die Vorrichtung mit der Säule 10, in der zwischen Filterkiesschichten 11 Verockerungsmaterial 12 lag. Die Filterkiesschichten 11 mit dem Verockerungsmaterial 12 hatten eine Höhe von ca. 22 cm in der Säule 10. Am Boden 13 der Säule 10 ist ein Einlass 14 angebracht, in dem eine Leitung 15 für vorbehandeltes Wasser mündet. Die Leitung 15 ist mit dem Auslass 21 einer Blasensäule 20 verbunden, in die Luft mit reaktiven Sauerstoffspezies durch eine Leitung 33 gefördert wird, so dass die Blasensäule 20 einen Mischer für die Luft mit reaktiven Sauerstoffspezies mit Wasser bildet, um vorbehandeltes Wasser in die Leitung 15 zu geben. Zur Förderung des vorbehandelten Wassers in die Säule 10 ist in der Leitung 15 eine Pumpe 5 angeschlossen. Zur Erzeugung der Luft mit reaktiven Sauerstoffspezies wird die Leitung 33 von einem Reaktor 30 gespeist, in dem zur dielektrischen Barriereentladung beabstandete und dielektrisch isolierte Elektroden 31 mit hochfrequenter Wechselspannung beaufschlagt werden, um ein kaltes Plasma zu erzeugen, während Luft mittels eines Kompressors 4 zwischen den Elektroden 31 im Reaktor 30 durchgedrückt wird. Der Ablauf 16 der Säule 10 ist durch eine Rückführleitung 17 mit der Blasensäule 20 verbunden, so dass das Wasservolumen in der Vorrichtung insgesamt konstant bleibt. In den Reaktor 30 wurde Luft mit bis zu 9,5 m3/h gedrückt, die Pumpe 5 wurde auf eine Förderleistung von 1,5 bis 8 L/h eingestellt.

Als Wasser wurde Stadtwasser (angegebener Eisengehalt 0,0337 mg/L) verwendet. Wenn der Reaktor 30 nicht in Betrieb war und entsprechend keine reaktiven Sauerstoffspezies erzeugt wurden, wies das im Kreislauf gepumpte Wasser keine erhöhten Eisengehalte auf. Dies wird als Hinweis angesehen, dass das Verockerungsmaterial stabil war und kaum oder kein gelöstes Eisen abgab. Eisengehalte wurden mit Schnelltests (erhältlich von Macherey&Nagel) bestimmt.

Während des Betriebs der Vorrichtung mit Beaufschlagung der Elektroden 31 im Reaktor 30 mit hochfrequenter Hochspannung stieg der Gehalt an Eisenionen im Wasser mit der Zeit auf 50 mg/L, also um einen Faktor von ca. 1500 gegenüber dem ursprünglichen Stadtwasser. Dieses Ergebnis zeigt, dass in Luft durch dielektrische Barriereentladung erzeugte reaktive Sauerstoffspezies nach Einmischen in Wasser beim Durchströmen eines Rohwasserfilters Eisen aus Verockerungen löst bzw. Verockerungen auflöst und überdies hohe Konzentrationen an Eisenionen im Wasser hält, ohne dass diese ausfallen.

### Beispiel 3: Schutz eines Rohwasserfilters vor Verockerung

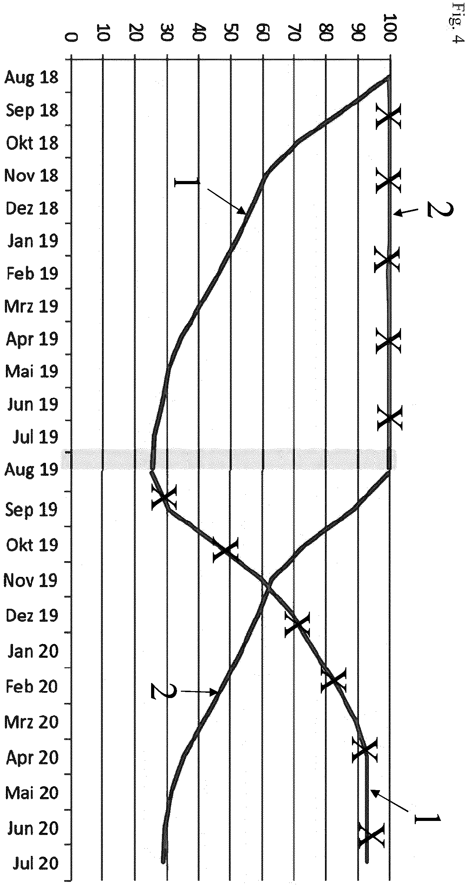

Als Beispiel für den Schutz eines Rohwasserfilters vor Verockerung wurde Rohwasser aus einem Brunnen gefördert, mit Luft, die durch dielektrische Barriereentladung erzeugte reaktive Sauerstoffspezies enthielt, gemischt, um vorbehandeltes Wasser zu erzeugen und dieses wurde durch das Kiesbett eines Rohwasserfilters gepumpt. Es wurde beobachtet, dass über einen Zeitraum von 12 Monaten die Durchsatzleistung des Rohwasserfilters im Wesentlichen konstant blieb, wie dies in Fig. 4 im gekreuzten Bereich der Linie 2, Bereich Aug 18 bis Aug 19 gezeigt ist.

Ab Aug 19 wurde das erfindungsgemäße Verfahren nicht mehr durchgeführt. Daraufhin wurde eine Abnahme der Durchsatzleistung innerhalb von 12 Monaten bis auf unter 30 % der ursprünglichen Durchsatzleistung des Rohwasserfilters beobachtet. Gleichzeitig verfärbte sich das Material des Filterbetts (nicht gezeigt) und zeigte eine Verockerung an.

Das Beispiel zeigt, dass mit dem erfindungsgemäßen Verfahren, insbesondere unter Verwendung einer erfindungsgemäßen Vorrichtung, die Verockerung eines Rohwasserfilters verhütet werden kann.

### Beispiel 4: Verringerung der Verockerung eines Brunnens

Als Beispiel für die Verringerung der Verockerung eines Brunnens durch Ablagerungen von Eisen- und Manganoxid wurde ein Brunnen, dessen Schachtwände mit Verockerung beschichtet waren, mit dem erfindungsgemäßen Verfahren behandelt.

In dem Schacht des Brunnens wurde eine Düse für vorbehandeltes Wasser angebracht, das durch Einmischen von Luft, die reaktive Sauerstoffspezies enthielt, in einer Venturidüse (Injektor) in Wasser, das in die Venturidüse gepumpt wurde. Die Luft mit reaktiven Sauerstoffspezies wurde mittels einer Einrichtung zur dielektrischen Barriereentladung erzeugt, deren isolierte Elektroden mit gepulster elektrischer Hochwechselspannung beaufschlagt wurden. Das in die als Mischer eingesetzte Venturidüse gepumpte Wasser war aus dem Brunnen entnommenes Rohwasser, das daraus erzeugte vorbehandelte Wasser wurde in den Brunnen zurückgeleitet.

Bei einer Befahrung des Brunnens mit einer Videokamera wurden deutliche Verockerungen festgestellt, die Schlitze in der hölzernen Brunnenwand zusetzten.

Die Venturidüse wurde z.B. mit ca. 3 m3/h Rohwasser als Treibmittel und 1,9 bis 2,6 m3/h Luft aus der dielektrischen Barriereentladung betrieben. In der Leitung, die vorbehandeltes Wasser von der Venturidüse zum Brunnen leitete, war ein Entlüftungsventil eingebaut, um den Eintrag ungelösten Gases zu vermeiden. Alternativ wurde das Entlüftungsventil geschlossen und es wurde festgestellt, dass der Eintrag ungelösten Gases in den Brunnen nicht störte.

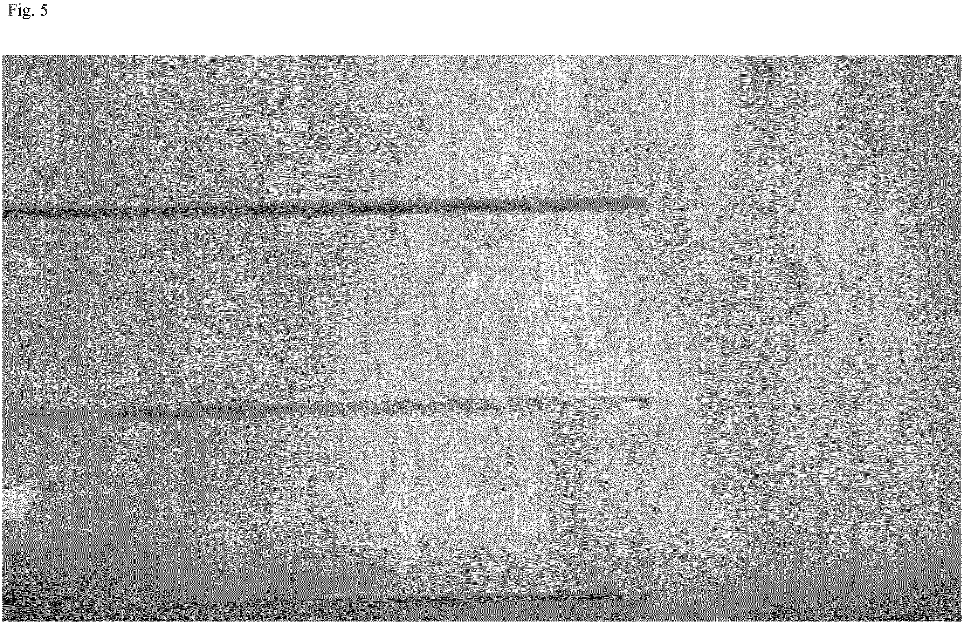

Bei der Inspektion des Brunnens per Videokamera wurde eine Verringerung der Verockerung festgestellt, insbesondere war die hölzerne Brunnenwand von Verockerungen befreit und die Holzmaserung sichtbar, wie dies in Fig. 5 gezeigt ist.

Dies zeigt, dass das mit reaktiven Sauerstoffspezies gemischte Wasser Verockerungen im Brunnen auflösen bzw. ablösen konnte. Da der Brunnen während dieses Versuchs nicht im Förderbetrieb war, betrug bei der Entnahme von ca. 8 m³/h die über den Brunnenquerschnitt gemittelte Strömungsgeschwindigkeit nur ca. 0,03 m/s. Dies zeigt, dass das Verfahren effektiv auch bei sehr niedrigen Strömungsgeschwindigkeiten effektiv Verockerungen löst bzw. verhindert. Die sehr niedrige Strömungsgeschwindigkeit wird auch als Anzeichen dafür genommen, dass es keine Scherkräfte waren, die die Verockerungen gelöst haben, sondern die in Wasser eingemischten reaktiven Sauerstoffspezies.

Messungen an der Leitung stromabwärts der Venturidüse ergaben einen Gehalt des vorbehandelten Wassers von ca. 0,2 bis 0,46 mg/L Ozon (bestimmt mittels Teststreifen der Fa. Merck) und ca. 0,12 bis 2 mg/L Wasserstoffperoxid (bestimmt mittels Teststreifen der Fa. Merck).

Alternativ wurde im Schacht des Brunnens eine Düse zum Einbringen von Wasser angebracht, die mit einer Leitung verbunden war, in die Wasser eingepumpt wurde, das mit Gas mit ionisiertem Sauerstoff vermischt war, das von einer Einrichtung zur dielektrisch behinderten Entladung erzeugt und zugeleitet wurde.

### Bezugszeichen:

- 1: Brunnen
- 2: Entnahmestelle
- 3: Filterkies
- 4: Kompressor
- 5: Pumpe
- 6: Rohwasserleitung
- 7: Reinwasserbehälter
- 8: Reinwasserpumpe
- 9: Reinwasserleitung
- 10: Einrichtung zum Ausfällen von Eisen- und/oder Manganoxid, Säule
- 11: Filterkiesschicht
- 12: Verockerungsmaterial
- 13: Boden
- 14: Einlass
- 15: Leitung
- 16: Ablauf
- 17: Rückführleitung
- 18: Ventil
- 20: Blasensäule
- 21: Auslass
- 22: Injektor, Vorrichtung zum Einmischen des Gases mit reaktiven Sauerstoffspezies
- 30: Reaktor, Einrichtung zur dielektrischen Barriereentladung
- 31: dielektrisch isolierte Elektroden
- 33: Leitung
- 34: elektrische Spannungsquelle
- 35: Sensor
- 36: Drucksensor
- S: Sperrschicht
- A: Aquifer

## Patentansprüche

1. Verfahren zur Behandlung von Rohwasser, das in einem Brunnen (1) und/oder einer Rohwasserleitung (6) und/oder einem Rohwasserfilter (10) und/oder in einem einen Brunnen (1) umgebenden Kiesfilterschicht (3) ist, mit den Schritten
- Ionisieren eines sauerstoffhaltigen Gases, insbesondere Luft, mit Sauerstoff angereicherte Luft oder 100% Sauerstoff, durch dielektrische Barriereentladung zur Erzeugung von Gas mit reaktiven Sauerstoffspezies, und
- Einmischen des Gases mit reaktiven Sauerstoffspezies in Rohwasser, um behandeltes Rohwasser zu erzeugen.

2. Verfahren nach Anspruch 1, **dadurch gekennzeichnet, dass** das Einmischen des Gases mit reaktiven Sauerstoffspezies in Rohwasser in Wasser erfolgt, das anschließend in den Schacht eines Brunnens (1) und/oder in eine einen Brunnen (1) umgebende Kiesfilterschicht (3) eines Brunnens (1) und/oder einen Aquifer und/oder in eine Rohwasserleitung (6) und/oder in einen Rohwasserfilter (10) eingeleitet wird.

3. Verfahren nach einem der Ansprüche 1 bis 2, **gekennzeichnet durch** anschließendes gezieltes Ausfällen von Eisen- und/oder Manganoxid aus dem behandelten Rohwasser, um aufbereitetes Wasser herzustellen.

4. Verfahren nach Anspruch 3, **dadurch gekennzeichnet, dass** das gezielte Ausfällen durch in Kontakt Bringen des behandelten Rohwassers mit Luft, Sauerstoff oder Ozon erfolgt.

5. Verfahren nach Anspruch 4, **dadurch gekennzeichnet, dass** das in Kontakt Bringen vor oder während des Durchströmens eines Beckens oder eines Rohwasserfilters (6) erfolgt.

6. Verfahren nach einem der voranstehenden Ansprüche, **dadurch gekennzeichnet, dass** das Einmischen dadurch erfolgt, dass Gas mit reaktiven Sauerstoffspezies in Wasser eingemischt wird, um vorbehandeltes Wasser zu erzeugen, und anschließend das vorbehandelte Wasser in das Rohwasser eingeleitet wird.

7. Verfahren nach einem der Ansprüche 1 bis 5, **dadurch gekennzeichnet, dass** das Einmischen des Gases mit reaktiven Sauerstoffspezies direkt in das Rohwasser erfolgt.

8. Verfahren nach einem der voranstehenden Ansprüche, **dadurch gekennzeichnet, dass** nach Einmischen des Gases mit reaktiven Sauerstoffspezies in Wasser aus dem Wasser ungelöstes Gas aus dem Wasser abgeschieden wird.

9. Vorrichtung zur Verwendung in einem Verfahren nach einem der voranstehenden Ansprüche mit zumindest einer an einem Brunnen (1) und/oder an einer Rohwasserleitung (6) und/oder einem Rohwasserfilter (10) und/oder an einer einen Brunnen (1) umgebenden Kiesfilter (3) und/oder an einem Aquifer angeschlossenen Einrichtung zur dielektrischen Barriereentladung (30) für die Erzeugung von Gas mit reaktiven Sauerstoffspezies.

10. Vorrichtung nach Anspruch 9, **gekennzeichnet durch** eine stromabwärts der Rohwasserleitung (6) und/oder des Brunnens (1) angeschlossene Einrichtung (10) zum Ausfällen von Eisen- und/oder Manganoxid, die eingerichtet ist, dass sie von Rohwasser durchströmt wird, um gelöste Eisen- und/oder Manganoxide daraus auszufällen.

11. Vorrichtung nach Anspruch 10, **dadurch gekennzeichnet, dass** die Einrichtung zum Ausfällen von Eisen- und Manganoxid an eine Einrichtung (30) zur dielektrischen Barriereentladung und zum Einmischen von Gas mit reaktiven Sauerstoffspezies angeschlossen ist, die gesteuert ist, kein Gas mit reaktiven Sauerstoffspezies zu erzeugen, wenn die Einrichtung (10) zum Ausfällen von Eisen- und/oder Manganoxid von Rohwasser durchströmt wird, und gesteuert ist, zur Regeneration der Einrichtung (10) Gas mit reaktiven Sauerstoffspezies zu erzeugen, während Wasser aus dem Ablauf (16) dieser Einrichtung (10) abgeleitet wird.

12. Vorrichtung nach einem der Ansprüche 10 bis 11, **dadurch gekennzeichnet, dass** die Einrichtung (10) zum Ausfällen von Eisen- und Manganoxid eingerichtet ist, einströmendes Rohwasser mit Luft in Kontakt zu bringen, wenn sie zum Ausfällen von Eisenoxid von Rohwasser durchströmt wird.

13. Vorrichtung nach einem der Ansprüche 10 bis 12, **dadurch gekennzeichnet, dass** die Einrichtung zum Ausfällen von Eisen- und Manganoxid ein Rohwasserfilter (10) mit einem Filterbett (11) ist.

14. Vorrichtung nach einem der Ansprüche 10 bis 13, **gekennzeichnet durch** eine Vorrichtung (22) zum Einmischen des Gases mit reaktiven Sauerstoffspezies, die von der Einrichtung (30) zur dielektrischen Barriereentladung mit Gas mit reaktiven Sauerstoffspezies beaufschlagt ist, und mit einer Einrichtung zum Abscheiden von ungelöstem Gas aus Wasser, die stromabwärts der Einrichtung (30) zur dielektrischen Barriereentladung angeschlossen ist.

15. Verfahren zur Herstellung einer Vorrichtung nach einem der Ansprüche 10 bis 14 durch Anschließen einer Einrichtung (30) zur dielektrischen Barriereentladung an einen Brunnen (1) und/oder eine Rohwasserleitung (6) und/oder an einen Rohwasserfilter (10) und/oder an eine einen Brunnen (1) umgebende Kiesfilterschicht (3) und/oder an einen Aquifer.

## Geänderte Patentansprüche

### Geänderte Patentansprüche gemäss Regel 137(2) EPÜ.

1. Verfahren zur Behandlung von Rohwasser, das in einem Brunnen (1) und/oder einer Rohwasserleitung (6) und/oder einem Rohwasserfilter (10) und/oder in einem einen Brunnen (1) umgebenden Kiesfilterschicht (3) ist, mit den Schritten
- Ionisieren eines sauerstoffhaltigen Gases, insbesondere Luft, mit Sauerstoff angereicherte Luft oder 100% Sauerstoff, durch dielektrische Barriereentladung zur Erzeugung von Gas mit reaktiven Sauerstoffspezies, und
- Einmischen des Gases mit reaktiven Sauerstoffspezies unmittelbar nach ihrer Erzeugung in Rohwasser, um behandeltes Rohwasser zu erzeugen, wobei die durch dielektrische Barriereentladung in sauerstoffhaltigem Gas erzeugten reaktiven Sauerstoffspezies nach Einmischen in Wasser Eisen- und Manganionen im Rohwasser gelöst halten.

2. Verfahren nach Anspruch 1, **dadurch gekennzeichnet, dass** das Einmischen des Gases mit reaktiven Sauerstoffspezies in Rohwasser in Wasser erfolgt, das anschließend in den Schacht eines Brunnens (1) und/oder in eine einen Brunnen (1) umgebende Kiesfilterschicht (3) eines Brunnens (1) und/oder einen Aquifer und/oder in eine Rohwasserleitung (6) und/oder in einen Rohwasserfilter (10) eingeleitet wird.

3. Verfahren nach einem der Ansprüche 1 bis 2, **gekennzeichnet durch** anschließendes gezieltes Ausfällen von Eisen- und/oder Manganoxid aus dem behandelten Rohwasser, um aufbereitetes Wasser herzustellen.

4. Verfahren nach Anspruch 3, **dadurch gekennzeichnet, dass** das gezielte Ausfällen durch in Kontakt Bringen des behandelten Rohwassers mit Luft, Sauerstoff oder Ozon erfolgt.

5. Verfahren nach Anspruch 4, **dadurch gekennzeichnet, dass** das in Kontakt Bringen vor oder während des Durchströmens eines Beckens oder eines Rohwasserfilters (6) erfolgt.

6. Verfahren nach einem der voranstehenden Ansprüche, **dadurch gekennzeichnet, dass** das Einmischen dadurch erfolgt, dass Gas mit reaktiven Sauerstoffspezies in Wasser eingemischt wird, um vorbehandeltes Wasser zu erzeugen, und anschließend das vorbehandelte Wasser in das Rohwasser eingeleitet wird.

7. Verfahren nach einem der Ansprüche 1 bis 5, **dadurch gekennzeichnet, dass** das Einmischen des Gases mit reaktiven Sauerstoffspezies direkt in das Rohwasser erfolgt.

8. Verfahren nach einem der voranstehenden Ansprüche, **dadurch gekennzeichnet, dass** nach Einmischen des Gases mit reaktiven Sauerstoffspezies in Wasser aus dem Wasser ungelöstes Gas aus dem Wasser abgeschieden wird.

9. Vorrichtung zur Verwendung in einem Verfahren nach einem der voranstehenden Ansprüche mit zumindest einer an einem Brunnen (1) und/oder an einer Rohwasserleitung (6) und/oder einem Rohwasserfilter (10) und/oder an einer einen Brunnen (1) umgebenden Kiesfilter (3) und/oder an einem Aquifer angeschlossenen Einrichtung zur dielektrischen Barriereentladung (30) für die Erzeugung von Gas mit reaktiven Sauerstoffspezies, mit einer stromabwärts der Rohwasserleitung (6) und/oder des Brunnens (1) angeschlossenen Einrichtung (10) zum Ausfällen von Eisen- und/oder Manganoxid, die eingerichtet ist, dass sie von Rohwasser durchströmt wird, um gelöste Eisen- und/oder Manganoxide daraus auszufällen.

10. Vorrichtung nach Anspruch 9, **dadurch gekennzeichnet, dass** die Einrichtung zum Ausfällen von Eisen- und Manganoxid an eine Einrichtung (30) zur dielektrischen Barriereentladung und zum Einmischen von Gas mit reaktiven Sauerstoffspezies angeschlossen ist, die gesteuert ist, kein Gas mit reaktiven Sauerstoffspezies zu erzeugen, wenn die Einrichtung (10) zum Ausfällen von Eisen- und/oder Manganoxid von Rohwasser durchströmt wird, und gesteuert ist, zur Regeneration der Einrichtung (10) Gas mit reaktiven Sauerstoffspezies zu erzeugen, während Wasser aus dem Ablauf (16) dieser Einrichtung (10) abgeleitet wird.

11. Vorrichtung nach einem der Ansprüche 9 bis 10, **dadurch gekennzeichnet, dass** die Einrichtung (10) zum Ausfällen von Eisen- und Manganoxid eingerichtet ist, einströmendes Rohwasser mit Luft in Kontakt zu bringen, wenn sie zum Ausfällen von Eisenoxid von Rohwasser durchströmt wird.

12. Vorrichtung nach einem der Ansprüche 9 bis 11, **dadurch gekennzeichnet, dass** die Einrichtung zum Ausfällen von Eisen- und Manganoxid ein Rohwasserfilter (10) mit einem Filterbett (11) ist.

13. Vorrichtung nach einem der Ansprüche 9 bis 12, **gekennzeichnet durch** eine Vorrichtung (22) zum Einmischen des Gases mit reaktiven Sauerstoffspezies, die von der Einrichtung (30) zur dielektrischen Barriereentladung mit Gas mit reaktiven Sauerstoffspezies beaufschlagt ist, und mit einer Einrichtung zum Abscheiden von ungelöstem Gas aus Wasser, die stromabwärts der Einrichtung (30) zur dielektrischen Barriereentladung angeschlossen ist.

14. Verfahren zur Herstellung einer Vorrichtung nach einem der Ansprüche 9 bis 13 durch Anschließen einer Einrichtung (30) zur dielektrischen Barriereentladung an einen Brunnen (1) und/oder eine Rohwasserleitung (6) und/oder an einen Rohwasserfilter (10) und/oder an eine einen Brunnen (1) umgebende Kiesfilterschicht (3) und/oder an einen Aquifer.
